# EUROPÄISCHE PATENTSCHRIFT

(11) **EP 2 647 116 B1**
(45) Veröffentlichungstag und Bekanntmachung des Hinweises auf die Patenterteilung: **27.06.2018**
(21) Anmeldenummer: 11776466.2
(22) Anmeldetag: 02.11.2011
(51) Int. Cl.: H02M 3/02, H02M 1/00, H02M 3/158

(54) **MULTIPHASENWANDLER MIT MAGNETISCH GEKOPPELTEN PHASEN**
POLYPHASE CONVERTER WITH MAGNETICALLY COUPLED PHASES
TRANSDUCTEUR MULTIPHASÉ DOTÉ DE PHASES À COUPLAGE MAGNÉTIQUE

(30) Priorität: 01.12.2010 DE 102010062240
(43) Veröffentlichungstag der Anmeldung: 09.10.2013
(73) Patentinhaber: Robert Bosch GmbH, 70442 Stuttgart (DE)
(72) Erfinder: HELMREICH, Wolfgang, 70193 Stuttgart (DE); HELLWIG, Roland, 71701 Schwieberdingen (DE)
(86) Internationale Anmeldenummer: PCT/EP2011/069248
(87) Internationale Veröffentlichungsnummer: WO 2012/072359

(56) Entgegenhaltungen:
- EP-B1- 1 145 416
- WO-A1-2009/114873
- DE-A1- 10 039 890
- DE-C1- 19 500 943
- US-A1- 2008 303 495

## Beschreibung

### Stand der Technik

Die Erfindung geht aus von einem Multiphasenwandler nach der Gattung des unabhängigen Anspruchs. Ein gattungsgemäßer Multiphasenwandler ist beispielsweise aus der WO 2009/114873 A1 bekannt. Der darin beschriebene DC/DC-Wandler umfasst eine Spule mit nicht linearem induktiven Widerstand, ein Schaltsystem und einen Ausgangsfilter. Dabei werden benachbarte Phasen miteinander gekoppelt.

Aus der EP 1145416 B1 ist bereits ein Umrichter für die Umformung von elektrischer Energie bekannt. So wird hier vorgeschlagen, dass die Drosselgröße durch die Verwendung von gekoppelten Induktivitäten reduziert werden kann. Hierbei sollen die gekoppelten Drosseln so dimensioniert werden, dass die Lastströme der Teilzweige sich gegenseitig kompensieren und zu keiner magnetischen Belastung der Drossel führen. Nur der Differenzstrom zwischen den einzelnen Teilzweigen führt dann zu einem magnetischen Feld.

Aus der DE 10039890 A1 ist bereits ein Planartransformator bekannt. Ein aus Kunststoff hergestellter Trägerkörper beinhaltet mehrere übereinander geschichtete Leiterbahnen, die als Stanzbiegebleche ausgebildet sind. Dabei sind die Leiterbahnen so innerhalb des Kunststoffträgerkörpers angeordnet, dass der Kunststoff zwischen den Leiterbahnen isolierend wirkt. Darüber hinaus enthält der Trägerkörper Wicklungen, die eine Primär- und eine Sekundärwicklung eines Planartransformators bilden.

Aus der DE 19500943 C1 ist bereits ein Planartransformator für Schaltnetzteile bekannt. Zunächst wird eine Kunststofffolie mit Öffnungen und Ausschnitten zum Durchführen der Seitenschenkel und des Mittelschenkels des Magnetkerns versehen. Die Kunststofffolie wird mit den beiden Wicklungen bedruckt und anschließend mit Kunststoffmasse umspritzt. Mehrere Trägerplatten werden gestapelt. Nachdem die Magnetkerne eingebaut wurden, wird die Montageeinheit mit einer isolierenden Kunststoffmasse umspritzt.

Aus der US 2008/303495 ist bereits eine Stromversorgungseinrichtung bekannt mit einer magnetisch entkoppelten Phase und einer ungeraden Anzahl von magnetisch gekoppelter Phasen mit einer zugehörigen Steuereinrichtung. Hierbei sind Schaltmittel vorgesehen sowie Schenkel- und Jochabschnitte eines jeweiligen magnetischen Kreises, so dass zumindest eine erste Phase mit zumindest einer weiteren Phase magnetisch gekoppelt ist. Somit offenbart die US 2008/303495 A1 den Oberbegriff des unabhängigen Anspruchs 1 des Anmeldungsgegenstands.

Es ist Aufgabe der vorliegenden Erfindung, einen Multiphasenwandler anzugeben, der sich durch einfache Fertigbarkeit und weitere Reduzierung des Bauraums, insbesondere durch geringeres Volumen des Kopplungsmittels, sowie einfache Regelbarkeit auszeichnet. Diese Aufgabe wird gelöst durch die Merkmale des unabhängigen Anspruchs.

Die Erfindung betrifft einen Multiphasenwandler gemäß Anspruch 1. Vorteilhafte Ausführungsformen sind in den abhängigen Ansprüchen definiert.

### Vorteile der Erfindung

Der erfindungsgemäße Multiphasenwandler mit den Merkmalen des unabhängigen Anspruchs 1 hat demgegenüber den Vorteil eines kostengünstigen und fertigungstechnisch einfachen Aufbaus des Multiphasenwandlers, da insbesondere zweidimensionale Phasenformen verwendet werden können. Auch die Kopplungsmittel lassen sich matrixförmig anordnen. Mit dem entsprechenden Multiphasenwandler gemäß den Merkmalen des unabhängigen Anspruchs kann somit ein komplexer dreidimensionaler Aufbau vermieden werden. Dadurch, dass zumindest ein Isolierkörper vorgesehen ist, der die zu koppelnden Phasen an seiner Oberseite bzw. Unterseite aufnimmt und an dem zumindest ein Befestigungsmittel vorgesehen ist, das zur Befestigung mit zumindest einer Phase zusammenwirkt, lassen sich mehrere Funktionen realisieren. Der Isolierkörper übernimmt die Befestigung der unterschiedlich anzuordnenden Phasen bzw. Kopplungsmittel sowie die Isolation der Phasen voneinander in einer fertigungstechnisch besonders vorteilhaften Weise. Denn nur ein vormontierter Isolierkörper muss mit den entsprechend angeordneten Kopplungsmitteln in Überdeckung gebracht werden.

Erfindungsgemäß ist vorgesehen, dass der Isolierkörper zumindest eine Ausnehmung aufweist zur Aufnahme zumindest eines Kopplungsmittels. Dadurch wird eine lagerichtige Montage des Kopplungsmittels erreicht bei gleichzeitiger Isolation des Kopplungsmittels von den auf dem Isolierkörper angeordneten Phasen.

In einer zweckmäßigen Weiterbildung ist ein Träger vorgesehen ist, der zumindest eine Auflagefläche aufweist zur Aufnahme des Kopplungsmittels. Dadurch kann eine positionsgenaue Vormontage der Kopplungsmittel erfolgen, so dass nur der Träger mit dem Isolierkörper zusammengeführt werden muss zur Bildung des Multiphasenwandlers. Hierzu weist der Träger besonders bevorzugt zumindest ein Befestigungsmittel auf zur Befestigung des Trägers mit dem Kopplungsmittel, dem Isolierkörper oder einer Leiterplatte. Besonders bevorzugt wirkt das Befestigungsmittel des Trägers mit einem Halteteil zusammenwirkt zur Fixierung des Kopplungsmittels mit dem Träger. Das Halteteil kann mehrere Teile mehrerer Kopplungsmittel gleichzeitig fixieren, so dass sich der Montageaufwand reduzieren lässt. Zudem könnte das Halteteil als Federmittel beispielsweise aus Federblech ausgeführt sein, so dass insbesondere bei einem zweiteiligen Kopplungsmittel die Teile durch das Halteteil gegeneinander gedrückt werden, so dass sich Luftspalte zwischen den Teilen der Kopplungsmittel reduzieren.

In einer zweckmäßigen Weiterbildung ist die Auflagefläche der Trägers so ausgebildet, dass das Kopplungsmittel nur teilweise auf dem Träger aufliegt. Die nicht aufliegende Fläche des Kopplungsmittels kann beispielsweise über Luftzirkulation zur Kühlung verwendet werden.

In einer zweckmäßigen Weiterbildung weist der Träger zumindest ein Führungsmittel aufweist, das zur Führung mit dem Kopplungsmittel zusammenwirkt. Dadurch kann die Montage der Kopplungsmittel in besonders einfacher Weise positionsgenau erfolgen, ohne dass weitere Hilfsmittel erforderlich wären.

In einer zweckmäßigen Weiterbildung ist vorgesehen, dass zumindest zwei Phasen, vorzugsweise drei Phasen, räumlich in einer ersten Ebene an der Oberseite des Trägers angeordnet sind und dass zumindest zwei weitere Phasen, vorzugsweise drei weitere Phasen, räumlich in einer zweiten Ebene an der Unterseite des Trägers verlaufen. Durch diese räumliche Anordnung können die Phasen in besonders einfacher Weise isoliert und montiert werden.

In einer zweckmäßigen Weiterbildung ist vorgesehen, dass zumindest eine Phase U-förmig, rechteckförmig und/oder mäanderförmig ausgebildet ist. In einer besonders zweckmäßigen Weiterbildung ist vorgesehen, dass die an der einen Seite des Trägers angeordnete Phase U-förmig und die an der gegenüberliegenden Seite des Trägers angeordnete Phase mäanderförmig ausgebildet ist. Diese geometrischen Formen lassen sich sehr einfach fertigen und ermöglichen eine einfache magnetische Kopplung, indem parallel und beabstandete Phasenabschnitte von Kopplungsmitteln umgeben werden können.

In einer zweckmäßigen Weiterbildung ist vorgesehen, dass das Befestigungsmittel des Isolierkörpers zumindest einen Haken umfasst, der mit zumindest einer Öffnung oder einer Seitekante einer Phase zusammenwirkt. Dadurch wird ein seitliches Verschieben zur lagerichtigen Positionierung ermöglicht. In einer zweckmäßigen Weiterbildung ist vorgesehen, dass ein Befestigungsmittel des Isolierkörpers mit einer Seitenkante am Abklappungsbereich der Phase zusammenwirkt. Dadurch wird insbesondere eine lagerichtige und schnelle Montage der Phasen unterstützt.

In einer zweckmäßigen Weiterbildung weist der Isolierkörper Stege auf zur elektrischen Isolation der Phasen voneinander bzw. gegenüber dem Kopplungsmittel. Dies erhöht die Sicherheit gegenüber unerwünschten Kurzschlüssen.

In einer zweckmäßigen Weiterbildung ist der Steg zwischen zwei Abklappungsbereichen zweier benachbarter Phasen angeordnet. Dadurch lässt sich der Platzbedarf des Muliphasenwandlers weiter reduzieren, da der Steg die elektrische Isolation benachbarter Phasen sicherstellt und gleichzeitig deren Lage zueinander bei geringem Abstand fixiert.

In einer zweckmäßigen Weiterbildung ist vorgesehen, dass das Befestigungsmittel des Trägers zwischen Ausnehmung und Phase angeordnet ist. Damit wird ein elektrisch leitender Kontakt zwischen Phase und Kopplungsmittel sicher unterbunden bei gleichzeitiger Befestigung von Phase und/oder Kopplungsmittel.

In einer zweckmäßigen Weiterbildung ist vorgesehen, dass das Befestigungsmittel des Isolierkörpers mit zumindest einer Anschlagfläche der Phase zusammenwirkt. Dadurch wird eine lagerichtige Montage der Phase relativ zum Isolierkörper sichergestellt.

In einer zweckmäßigen Weiterbildung ist vorgesehen, dass die Phasen als Stanzgitter und/oder als Teil einer Leiterplatte aufgebaut sind. Diese Art der Herstellung ist besonders kostengünstig. Bei der der Integration zumindest eines Teils der Phasen in einer Leiterplatte können weitere elektronische Komponenten wie die Schaltmittel dort angeordnet werden.

In einer zweckmäßigen Weiterbildung ist vorgesehen, dass die Phasen als Stanzgitter ausgebildet sind. Diese Art der Herstellung zeichnet sich durch günstige Herstellkosten aus. Bei einem sechsphasigen System können hierbei drei Phasen rechteckförmig und drei Phasen U-förmig ausgebildet werden. Im Wesentlichen können die selben geometrischen Formen verwendet werden, sodass sich die Herstellung weiter vergünstigt.

In einer zweckmäßigen Weiterbildung ist vorgesehen, dass zumindest zwei zu koppelnde Phasen zumindest teilweise von einem Kopplungsmittel umschlossen sind, wobei die zu koppelnden Phasen vorzugsweise mit unterschiedlicher Stromrichtung ansteuerbar sind. Vorzugsweise verlaufen die zu koppelnden Phasen in dem vom Kopplungsmittel umschlossenen Bereich zumindest teilweise annähernd parallel verlaufen. In einer besonders zweckmäßigen Weiterbildung ist vorgesehen, dass das Kopplungsmittel zumindest zwei magnetisch zu koppelnde Phasen jeweils in einem ersten Bereich und in einem zweiten Bereich umschließt. Durch diese gewählte Art der Kopplung können Standardteile wie beispielsweise planare Ferritkerne als Kopplungsmittel eingesetzt werden. Diese könnten einen rechteckförmigen bzw. doppelrechteckförmigen Querschnitt aufweisen. In einer zweckmäßigen Weiterbildung ist vorgesehen, dass die Kopplungsmittel matrixförmig angeordnet sind. Insbesondere bei einer rechteckförmigen Außenkontur der Kopplungsmittel können bei der vorgeschlagenen Verkopplung bei sechs Phasen die erforderlichen neuen Kopplungsmittel matrixförmig (3x3) und somit platzsparend und planar angeordnet werden. In einer zweckmäßigen Weiterbildung ist vorgesehen, dass das Kopplungsmittel zumindest zwei Teile umfasst, wobei eines der Teile einen U-, O-, I- oder E-förmigen Querschnitt aufweist. Durch diesen Aufbau lassen sich besonders einfach die zu koppelnden Phasen durch das Kopplungsmittel umgeben. In einer zweckmäßigen Weiterbildung ist vorgesehen, dass zwischen zwei Teilen ein Spalt, vorzugsweise ein Luftspalt vorgesehen ist. Auf diese Art und Weise lässt sich besonders einfach die Induktivität beeinflussen. In einer zweckmäßigen Weiterbildung ist vorgesehen, dass mehrere, aus zumindest zwei Teilen bestehende Kopplungsmittel zumindest ein gemeinsames Teil aufweisen, vorzugsweise eine Metallplatte. Damit könnte sich die Montage erleichtern, da sämtliche Kopplungsmittel in nur einem Schritt durch das Aufsetzen der Platte geschlossen werden könnten.

In einer zweckmäßigen Weiterbildung ist vorgesehen, dass eine Phase mit einer weiteren Phase gekoppelt ist zur zumindest teilweisen Kompensation des Gleichanteils des Stromverlaufs. In einer besonders zweckmäßigen Weiterbildung ist vorgesehen, dass eine Phase mit zumindest einer weiteren Phase magnetisch gekoppelt ist, die im Wesentlichen um etwa 180° phasenverschoben angesteuert ist. Dadurch ergibt sich eine besonders starke Kompensation der Gleichfelder, sodass die magnetische Aussteuerung weiter reduziert werden kann. Als weitere Folge können die Kopplungsmittel kleiner werden bzw. es kann auf einen Luftspalt verzichtet werden. Durch diese Art der Kopplung der Phasen können die Kopplungsmittel in einer geometrisch vorteilhaften Matrixanordnung vorgesehen werden. Diese zeichnet sich durch einfachen Aufbau, die Verwendung einfacher Kopplungsmittel wie planare Ferritkerne und geringe räumliche Ausdehnung aus. Außerdem können Filter geringer dimensioniert werden.

In einer zweckmäßigen Weiterbildung ist vorgesehen, dass die Schaltmittel bis die Phasen sequentiell ansteuern und dass eine Phase mit zumindest einer weiteren Phase magnetisch gekoppelt ist, die unmittelbar vorher und/oder nachher angesteuert ist. In einer besonders zweckmäßigen Weiterbildung ist vorgesehen, dass eine Phase mit zumindest einer weiteren Phase magnetisch gekoppelt ist, deren Einschalt- oder Ausschaltzeitpunkt unmittelbar vorher und/oder nachher liegt. In einer zweckmäßigen Weiterbildung ist vorgesehen, dass eine Phase mit zumindest zwei weiteren Phasen magnetisch gekoppelt ist, die jeweils unmittelbar vorher und nachher angesteuert sind.
Durch diese Ansteuerungen ergeben sich relativ einfache Stromverläufe, die sich damit auch relativ einfach regeln lassen.

In einer zweckmäßigen Weiterbildung ist vorgesehen, dass drei Kopplungsmittel vorgesehen sind, um eine der Phasen mit drei weiteren Phasen magnetisch zu koppeln. In einer besonders zweckmäßigen Weiterbildung ist vorgesehen, dass genau sechs Phasen vorgesehen sind, wobei die Kopplungsmittel jede der sechs Phasen mit drei weiteren der sechs Phasen magnetisch koppeln. Bei dieser Art der Verkopplung ist einerseits gewährleistet, dass sich die einzelnen Phasen noch unabhängig voneinander gesteuert werden können. Außerdem lässt sich die Ausfallsicherheit des Multiphasenwandlers erhöhen aufgrund der stärkeren Vernetzung der Phasen.

Durch die magnetische Kopplung einer Phase mit zumindest drei weiteren Phasen kann eine störende gegenseitige Beeinflussung der Phasen minimiert werden. Die zu verkoppelnden Phasen werden dabei so ausgewählt, dass eine optimale Kompensation erreicht werden kann. Dies erfolgt insbesondere durch ein gegenläufiges Stromprofil. Ziel ist es hierbei, dass die Phasen magnetisch so gekoppelt werden, dass sich das resultierende Magnetfeld aufgrund der verkoppelten Phasen minimiert. Dadurch lässt sich auf ein vom Bauraum her kleines Kopplungsmittel wie beispielsweise ein Ferritkern zur Kopplung der magnetischen Flüsse zurückgreifen. Durch eine entsprechende Kopplung konnte das Magnetfeld stark reduziert werden, sodass auch das entsprechende Kopplungsmittel, beispielsweise ein Ferritkern, in entsprechender Weise in seiner Masse reduziert werden kann. Bei der vorgeschlagenen Kopplung können die Phasen der Reihe nach angesteuert werden. Hierbei entstehen relativ einfache und somit leicht regelbare Stromverläufe. In besonders zweckmäßiger Weise wird eine Phase - bei einer Anordnung mit sechs Phasen - mit den beiden jeweils benachbarten Phasen und auch mit einer um 180 Grad verschobenen Phase verkoppelt. Als benachbarte Phase wird eine solche verstanden, die unmittelbar vorausgehend oder nachfolgend angesteuert wird. Bei der vorgeschlagenen magnetischen Kopplung ist darüber hinaus eine unabhängige Ansteuerung der einzelnen Phasen voneinander möglich.

Dadurch, dass Kopplungsmittel vorgesehen sind, die zumindest eine Phase mit zumindest drei weiteren Phasen magnetisch koppeln, lässt sich auch die Ausfallsicherheit erhöhen, da durch die zumindest dreifache Verkopplung eine höhere Vernetzung der Phasen erzielt wird, sodass der Ausfall einer Phase noch nicht zu unsicheren Betriebszuständen führen kann.

In einer zweckmäßigen Weiterbildung ist vorgesehen, dass solche Phasen miteinander verkoppelt werden, die näherungsweise gegenphasige Stromverläufe aufweisen. Dadurch ergibt sich eine starke Kompensation der Gleichfelder, sodass die magnetische Aussteuerung weiter reduziert werden kann. Als weitere Folge können die Kopplungsmittel kleiner werden bzw. es kann auf einen Luftspalt verzichtet werden.

In einer zweckmäßigen Weiterbildung ist vorgesehen, dass zumindest zwei, insbesondere drei Kopplungsmittel vorgesehen sind, um eine der Phasen mit zwei weiteren Phasen magnetisch zu koppeln, wobei zumindest eines der beiden Kopplungsmittel eine geringere Induktivität als das andere Kopplungsmittel, aufweist. Durch gezielte Wahl der Induktivität des Kopplungsmittels können verschiedene Aspekte beeinflusst und optimiert werden. Zum einen beeinflusst die Induktivität die Verlustleistung und damit auch die Wärmeentwicklung in den Kopplungsmitteln. Eine Reduzierung der Induktivität reduziert auch die Verlustleistung. Außerdem kann eine geringere Induktivität als Sättigungsschutz dienen. Dadurch sättigen Kopplungsmittel mit geringerer Induktivität erst später bei höheren Strömen, so dass sich der Multiphasenwandler im Fehlerfall noch länger in einem stabilen Betriebszustand betrieben werden kann. Andererseits reduziert eine hohe Induktivität den Stromripple, also die Welligkeit des Stroms. Damit kann mit der Wahl der geeigneten Induktivität die Verlustverteilung, Sättigungsverhalten und Stromwelligkeit optimiert werden.

In einer zweckmäßigen Weiterbildung ist vorgesehen, dass das Kopplungsmittel, das eine Phase mit einer Phase koppelt, die im Wesentlichen um etwa 180° phasenverschoben angesteuert ist, eine geringere Induktivität als zumindest eines der anderen Kopplungsmittel aufweist. Dadurch können diese in der Regel stärker belasteten Kopplungsmittel hinsichtlich der Verluste reduziert werden, so dass auch eine geringere Wärmeentwicklung erzielt wird.

In einer zweckmäßigen Weiterbildung ist vorgesehen, dass drei Kopplungsmittel vorgesehen sind, um eine der Phasen mit drei weiteren Phasen magnetisch zu koppeln, wobei zumindest eines der drei Kopplungsmittel eine geringere Induktivität als die beiden anderen Kopplungsmittel aufweist. Damit wird für eine Phase ein Sättigungsschutz realisiert, der sich positiv auf die Systemstabilität auswirkt. Zweckmäßiger Weise sollte für jede der vorzugsweise sechs Phasen ein Kopplungsmittel mit geringerer Induktivität vorgesehen sein. In einer zweckmäßigen Weiterbildung ist vorgesehen, dass das Kopplungsmittel mit einem Luftspalt versehen ist. In besonders einfacher Weise kann dadurch die Induktivität des Kopplungsmittels beeinflusst werden. Wird bei sonst gleicher Bauweise des Kopplungsmittels ein Luftspalt vorgesehen, wird die Induktivität gegenüber der Version ohne Luftspalt verringert. Dies kann besonders zweckmäßig dadurch erfolgen, indem der mittlere der drei Schenkel des Kopplungsmittels gegenüber den beiden äußeren verkürzt wird, so dass sich dort ein Luftspalt ausbildet.

Weitere zweckmäßige Weiterbildungen ergeben sich aus weiteren abhängigen Ansprüchen und aus der Beschreibung.

### Zeichnung

Mehrere Ausführungsbeispiele sind in den Figuren dargestellt und werden nachfolgend näher beschrieben.

Es zeigen:
Figur 1 eine Schaltungsanordnung,
die Figur 2 eine schematische Darstellung der jeweiligen Verkopplung der Phasen,
die Figur 3 die räumliche Anordnung der verschiedenen Phasen und Kopplungsmittel,
die Figur 4 einen Schnitt durch ein Kopplungsmittel mit zwei verkoppelten Phasen,
die Figur 5 zwei typische Ausgestaltungen der Phasen gemäß dem Ausführungsbeispiel nach Figur 3,
die Figur 6 eine perspektivische Ansicht eines weiteren Ausführungsbeispiels von zweiter, vierter und sechster Phase,
die Figur 7 eine perspektivische Ansicht eines weiteren Ausführungsbeispiels von erster, dritter und fünfter Phase,
die Figur 8 eine perspektivische Ansicht eines Isolierkörpers des weiteren Ausführungsbeispiels,
die Figur 9 eine perspektivische Ansicht des Isolierkörpers nach Figur 8 mit montierter erster, dritter und fünfter Phase,
die Figur 10 eine perspektivische Rückansicht des Ausführungsbeispiels nach den Figuren 8 und 9 mit montierter zweiter und sechster Phase,
die Figur 11 eine perspektivische Ansicht eines Trägers,
die Figur 12 eine Draufsicht auf den Träger mit teilweise montierten Kopplungsmitteln sowie
die Figur 13 eine perspektivische Darstellung des Ausführungsbeispiels gemäß den Figuren 8 bis 10 mit bereits komplett bzw. teilweise montierten Kopplungsmitteln.

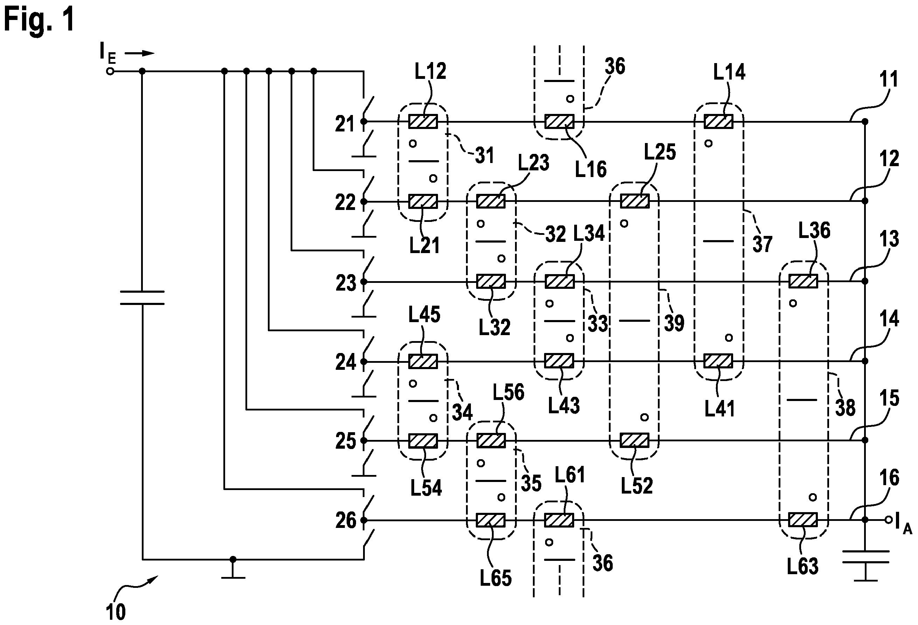

Der Aufbau eines Multiphasenwandlers 10 ist gemäß Figur 1 schaltungstechnisch dargestellt. Der hier beispielhaft beschriebene Multiphasenwandler 10 besteht aus sechs Phasen 11 bis 16. Jede der Phasen 11 bis 16 lässt sich einzeln über entsprechende Schaltmittel 21 bis 26 ansteuern, jeweils bestehend aus einem Highside-Schalter und einem Lowside-Schalter. Jeder Strom der Phasen 11 bis 16 fließt aufgrund magnetischer Kopplung mit drei weiteren Phasen durch drei Induktivitäten Lxx, die die entsprechenden Kopplungsmittel 31 bis 39 bewirken. Ein erstes Kopplungsmittel 31 koppelt die erste Phase 11 mit der zweiten Phase 12 magnetisch, so dass sich für die erste Phase 11 eine Induktivität L12, für die zweite Phase 12 eine Induktivität L21 ergibt. Ein sechstes Kopplungsmittel 36 koppelt die erste Phase 11 mit der sechsten Phase 16 magnetisch, so dass sich für die erste Phase 11 eine Induktivität L16, für die sechste Phase 16 eine Induktivität L61 ergibt. Ein siebtes Kopplungsmittel 37 koppelt die erste Phase 11 mit der vierten Phase 14 magnetisch, so dass sich für die erste Phase 11 eine Induktivität L14, für die sechste Phase 16 eine Induktivität L41 ergibt. Ein zweites Kopplungsmittel 32 koppelt die zweite Phase 12 mit der dritten Phase 13 magnetisch, so dass sich für die zweite Phase 12 eine Induktivität L23, für die dritte Phase 13 eine Induktivität L32 ergibt. Ein neuntes Kopplungsmittel 39 koppelt die zweite Phase 12 mit der fünften Phase 15 magnetisch, so dass sich für die zweite Phase 12 eine Induktivität L25, für die fünfte Phase 15 eine Induktivität L52 ergibt. Ein drittes Kopplungsmittel 33 koppelt die dritte Phase 13 mit der vierten Phase 14 magnetisch, so dass sich für die dritte Phase 13 eine Induktivität L34, für die vierte Phase 14 eine Induktivität L43 ergibt. Ein achtes Kopplungsmittel 38 koppelt die dritte Phase 13 mit der sechsten Phase 16 magnetisch, so dass sich für die dritte Phase 13 eine Induktivität L36, für die sechste Phase 16 eine Induktivität L63 ergibt. Ein viertes Kopplungsmittel 34 koppelt die vierte Phase 14 mit der fünften Phase 15 magnetisch, so dass sich für die vierte Phase 14 eine Induktivität L45, für die fünfte Phase 15 eine Induktivität L54 ergibt. Ein fünftes Kopplungsmittel 35 koppelt die fünfte Phase 15 mit der sechsten Phase 16 magnetisch, so dass sich für die fünfte Phase 15 eine Induktivität L56, für die sechste Phase 16 eine Induktivität L65 ergibt.

Ein Eingangsstrom I_{E} verteilt sich auf die sechs Phasen 11 bis 16. Am Eingang ist ein Kondensator als Filtermittel gegen Masse geschaltet. Die Ausgänge der Phasen 11 bis 16 sind an einem gemeinsamen Summationspunkt zusammengeführt und mittels einem nicht näher bezeichneten Kondensator als Filtermittel gegen Masse geschaltet. An dem gemeinsamen ausgangsseitigen Summationspunkt liegt dann der Ausgangsstrom I_{A} an. Die jeweils miteinander gekoppelten Induktivitäten Lxx sind mit unterschiedlichem Wicklungssinn zueinander orientiert wie durch die entsprechenden Punkte in Figur 1 angedeutet.

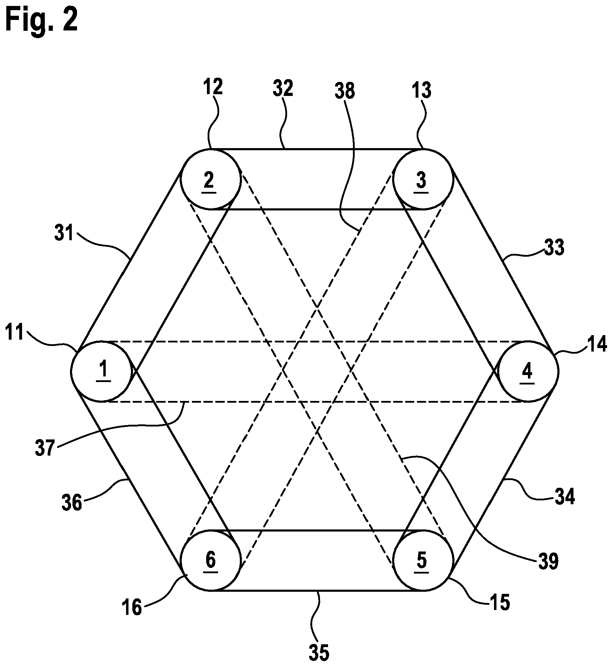

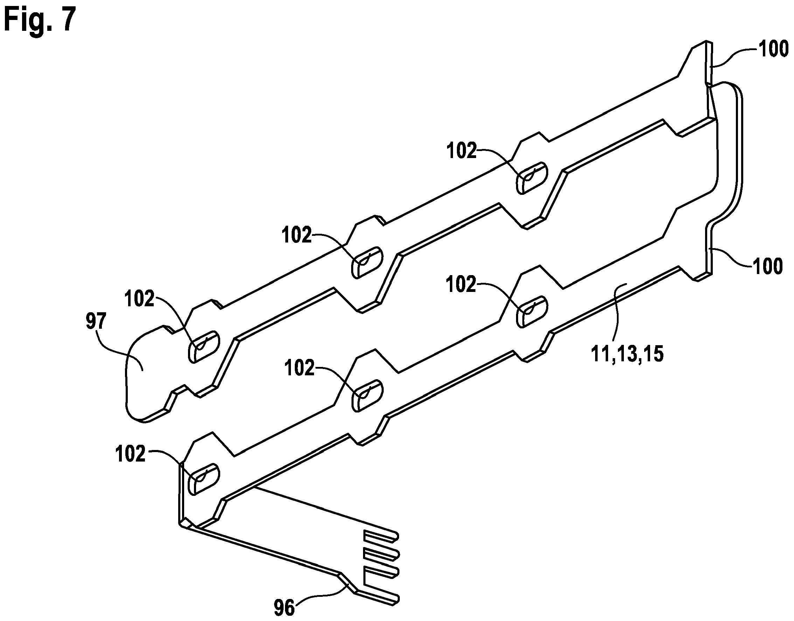

In Figur 2 ist systematisch dargestellt, wie die sechs Phasen 11 bis 16 durch entsprechende Kopplungsmittel 31 bis 39 miteinander verkoppelt sind. Wie bereits in Verbindung mit Figur 1 beschrieben, werden sowohl benachbarte Phasen miteinander verkoppelt wie auch zusätzlich die um 180 Grad versetzte Phase. Als benachbarte Phase wird eine solche verstanden, die zeitlich unmittelbar vorausgehend oder nachfolgend angesteuert wird, das heißt deren Einschaltzeitpunkte zeitlich unmittelbar vorher oder nachher liegen. Im Ausführungsbeispiel wird die Bezeichnung der Phasen 11 bis 16 so gewählt, dass die Phasen 11 bis 16 entsprechend der Nummerierung nacheinander angesteuert werden, das heißt in der Reihenfolge (Angaben entsprechen den Bezugszeichen der Phasen): 11 - 12 - 13 - 14 - 15 - 16 - 11 usw., jeweils um 60 Grad bzw. um T/6 (360 Grad / Anzahl der Phasen) phasenverschoben, wobei T die Periodendauer eines Ansteuerzyklus darstellt. Diese Reihenfolge ist auch in Figur 2 und Figur 7 gezeigt. Das heißt die Startzeitpunkte für die verschiedenen Phasen 11 bis 16 sind um jeweils 60 Grad phasenverschoben bzw. um jeweils T/6 zeitlich verschoben. In Figur 7 wird zwar die jeweilige Phase nach der zeitlichen Dauer T/6 wieder ausgeschaltet (PWM-Verhältnis 1/6). Je nach gewünschtem Spannungsverhältnis könnte die Abschaltung früher oder später, bis hin zu Dauer-Ein Te, erfolgen, je nach gewünschtem PWM-Signal (zwischen 0% (Dauer-Aus, Te=0) und 100% (Dauer-Ein, Te=T), bezogen auf eine Periodendauer T).

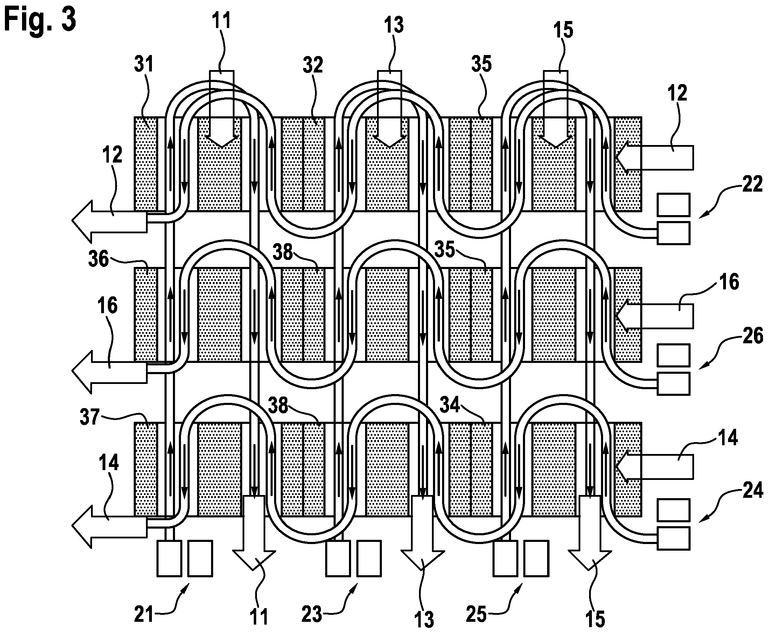

In Figur 3 ist nun schematisch der matrizenhafte räumliche Aufbau des in Figur 2 gezeigten Konzepts abgebildet. Hierbei sind die Kopplungsmittel 31 bis 39 vorzugsweise als planare Spulenkerne, beispielsweise Ferritkerne, ausgebildet, die jeweils zwei Hohlräume aufweisen. In diesen Hohlräumen des Kopplungsmittels 31 bis 39 sind jeweils zwei Leiter bzw. Phasenabschnitte zweier zu verkoppelnder Phasen umschlossen, die in diesen Abschnitten unterschiedliche Stromrichtungen aufweisen wie durch die Pfeile angedeutet.

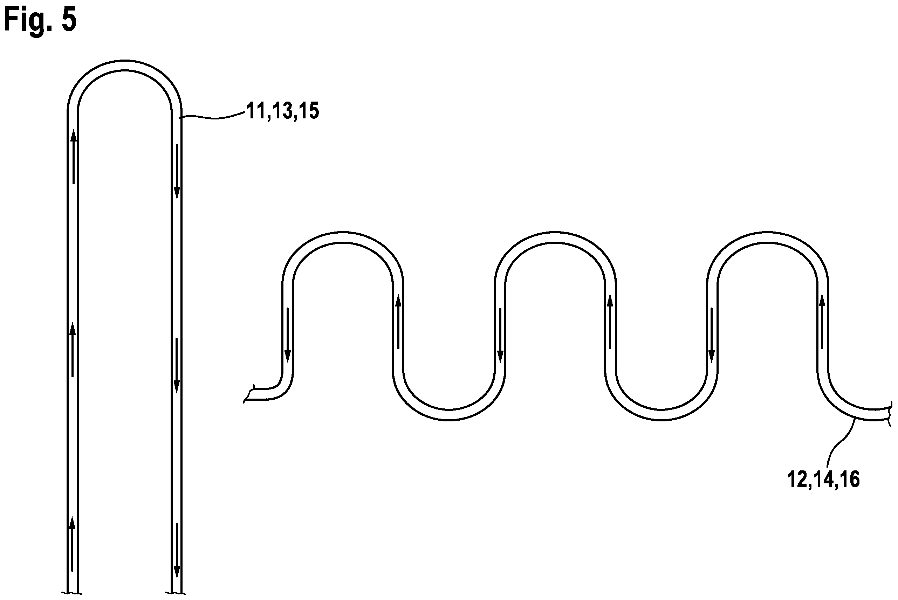

Unter Verweis auch auf Figur 5 lassen sich zwei geometrische Formen der Phasen 11 bis 16 bzw. Stromschienen oder Leitern der Phasen 11 bis 16 ausmachen. Die erste Phase 11, dritte Phase 13 sowie fünfte Phase 15 sind U-förmig ausgebildet. Diese drei Phasen 11, 13, 15 verlaufen vorzugsweise alle in derselben Ebene. In einer weiteren hierzu beabstandeten und parallelen Ebene - im Ausführungsbeispiel gemäß Figur 3 oberhalb - verlaufen die zweite, vierte und sechste Phase 12, 14, 16. Zweite, vierte sowie sechste Phase 12, 14, 16 sind rechteckförmig bzw. mäanderförmig ausgebildet. Sie sind hierbei so angeordnet, dass sie mit der jeweils zu verkoppelnden Phase U-förmigen Phase 11, 13, 15 in dem jeweiligen Kopplungsmittel 31 bis 39 umschlossen werden bei unterschiedlicher Stromrichtung.

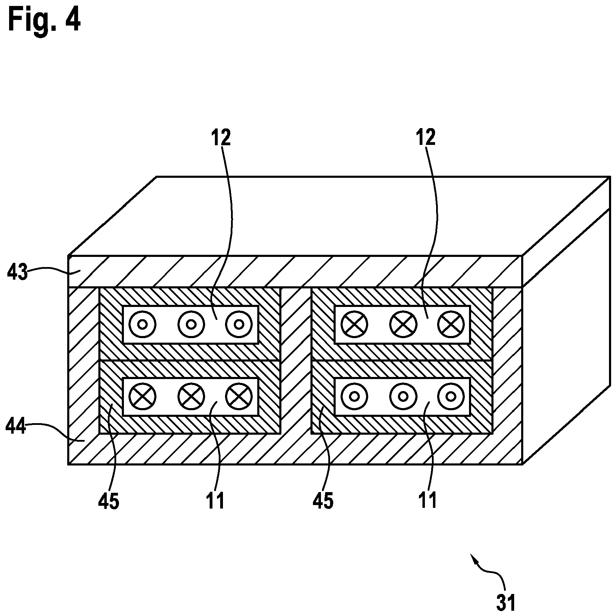

Unter Bezugnahme auf die Schnittdarstellung in Figur 4 wird die in Figur 3 dargestellte Kopplung beispielhaft anhand der ersten Phase 11 und der zweiten Phase 12 erläutert. Das erste Kopplungsmittel 31 besteht aus einem E-förmigen ersten Teil 44 und einem plattenförmigen zweiten Teil 43, die die Spulenkerne bilden. Die Schenkel des ersten Teils 44 mit E-förmigen Querschnitt sind alle gleich lang, sodass sie durch das plattenförmige (I-förmiger Querschnitt) zweite Teil 43 ohne Luftspalt geschlossen werden können. Der vorzugsweise bandförmige Abschnitt der ersten Phase 11 ist jeweils in dem unteren Bereich des Kopplungsmittels 31 eingebracht. Diese gezeigten Abschnitte der ersten Phase 11 liegen in derselben Ebene, sind zueinander also planar. Die Stromrichtung entspricht derjenigen durch Pfeile angedeuteten Stromrichtung gemäß Figur 3. Im jeweils darüberliegenden Bereich des ersten Kopplungsmittels 31 kommt nun die zweite Phase 12, vorzugsweise ebenfalls bandförmig ausgebildet, zu liegen. Auf der anderen Seite des ersten Kopplungsmittels 31 werden in dessen weiterem Hohlraum erste und zweite Phase 11, 12 in jeweils gegenüber der Stromrichtung im anderem Hohlraum entgegen gesetzter Stromrichtung durchgeführt. Dies erfolgt im Fall des ersten Kopplungsmittels 31 dadurch, dass sowohl die erste Phase 11 als auch die zweite Phase 12 an der oberen Stirnseite des ersten Kopplungsmittels 11 in einer 180 Grad-Biegung wieder durch den anderen Hohlraum zurückgeführt werden. Auch die beiden Abschnitte der zweiten Phase 12, die vom ersten Kopplungsmittel 31 umschlossen werden, befinden sich in derselben Ebene, sind also planar ausgebildet. Die Ebene der ersten Phase 11 und die Ebene der zweiten Phase 12 sind zumindest im inneren Bereich des ersten Kopplungsmittels 31 parallel und beabstandet zueinander ausgebildet.

Durch das erste Kopplungsmittel 31 sind nun die erste Phase 11 und die zweite Phase 12 miteinander magnetisch verkoppelt. Durch die angedeutete antiparallele Stromführung wird erreicht, das resultierende Magnetfeld möglichst gering zu halten, sodass die Größe des Kopplungsmittels 31 minimiert werden kann. Außerdem ist zwischen der ersten Phase 11 und der zweiten Phase 12 jeweils eine Isolierung 45 vorgesehen zur elektrischen Trennung der beiden Phasen 11, 12 voneinander und jeweils zum Kopplungsmittel 31.

In gleicher Weise ist die zweite Phase 12 über das zweite Kopplungsmittel 32 mit der dritten Phase 13 gekoppelt. Außerdem ist die zweite Phase 12 mittels des neunten Kopplungsmittels 39 mit der fünften Phase 15 verkoppelt. Die weiteren entsprechenden Kopplungen lassen sich der Figur 3 entnehmen und werden nicht nochmals eigens beschrieben.

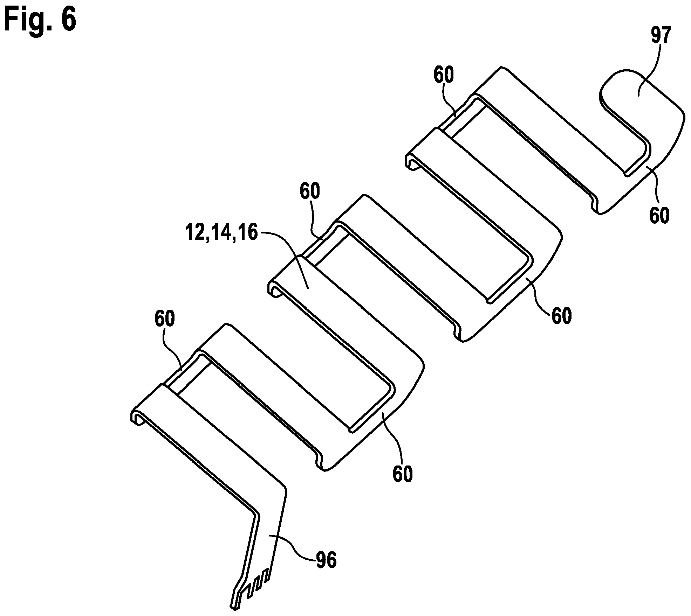

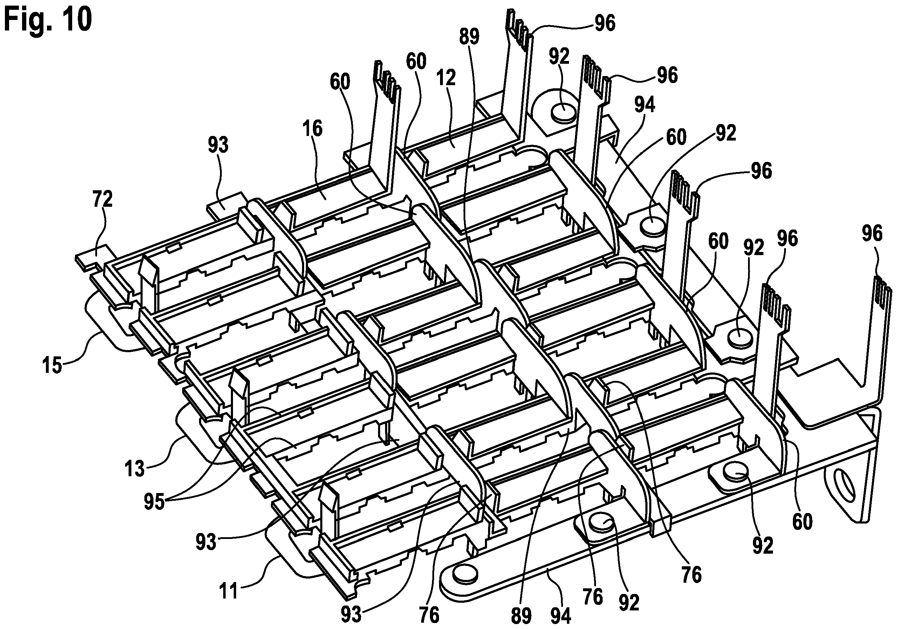

In Figur 6 ist eine perspektivische Darstellung eines alternativen Ausführungsbeispiels der mäanderförmigen oder S-förmigen zweiten, vierten bzw. sechsten Phase 12, 14, 16 gezeigt. Im wesentlichen laufen die mäanderförmigen Phasen 12, 14, 16 in einer Ebene. Allerdings weisen sie Abklappungsbereiche 60 auf, die senkrecht zu der Hauptebene orientiert sind. Diese Abklappungsbereiche 60 sind um ca. 90° abgewinkelt gegenüber der Hauptebene und jeweils seitlich wechselseitig versetzt angeordnet. Sie verbinden jeweils die in der Hauptebene liegenden Abschnitte. Die in der Hauptebene liegende Bereiche der Stromschienen der mäanderförmigen Phasen 12, 14, 16 werden von den Kopplungsmitteln 31 bis 39 umgeben zusammen mit Abschnitten der jeweiligen u-förmigen Phasen 11, 13, 15, deren Hauptebene parallel und beabstandet zu derjenigen der mäanderförmigen Phasen 12, 14, 16 orientiert ist. Das Ausbilden der Abklappungsbereiche 60 trägt zur Reduzierung des Platzbedarfs des Multiphasenwandlers 10 bei, da nun die benachbarten mäanderförmigen Phasen 12 und 16 bzw. 16 und 14 näher zusammenrücken können wie beispielsweise aus Figur 10 ersichtlich. Die Leiterbahnen der mäanderförmigen Phasen 12, 14, 16 sind insbesondere bandförmig ausgebildet.

Die Übergänge der Abschnitte der Stromschiene der Hauptebene zu den Abklappungsbereichen 60 sind seitlich verrundet.

Ebenfalls senkrecht zu der Hauptebene der mäanderförmigen Phasen 12, 14, 16 ist ein Anschluss 96 vorgesehen zur Beaufschlagung der Phasen 12, 14, 16 mit Strom. Auf der zum Anschluss 96 gegenüberliegenden Seite ist eine in der Hauptebene liegende Anschlussfläche 97 vorgesehen zur Kontaktierung mit einer Sammelschiene 94. Beginnend mit dem senkrecht zur Hauptebene orientierten Anschluss 96 wird die bandförmige Stromschiene bei Erreichen der Hauptebene durch eine Abkantung um 90° lediglich in ihrer Richtung geändert und verläuft dann in der Hauptebene nach links bis zum ersten, linken Abklappungsbereich 60. Dieser umfasst sowohl eine Abkantung um 90°, so dass die schmale Seitenfläche der Stromschiene parallel zur Hauptebene orientiert ist. Auch weist der Abklappungsbereich zwei Richtungsänderungen der Stromschienen um jeweils 90°, um die gewünschte mäander- bzw. S-förmige Struktur zu erreichen. Nach der zweiten Richtungsänderung der Stromschiene verläuft diese wieder nach erneuter Abkantung in der Hauptebene von links nach rechts, bis sich über eine Abkantung ein weiterer, rechter Abklappungsbereich 60 anschließt. Dies wiederholt sich, so dass sechs in der Hauptebene verlaufende Stromschienenabschnitte entstehen, die jeweils seitlich durch drei bzw. zwei Abklappungsbereiche 60 verbunden sind. Der letzte, hintere Abklappungsbereich 60 verbindet den letzten in der Hauptebene verlaufenden Stromschienenabschnitt mit der Anschlussfläche 97, die ebenfalls in der Hauptebene verläuft.

Bei dem Ausführungsbeispiel gemäß Figur 7 ist ein weitere alternative Ausgestaltung der u-förmigen ersten, dritten bzw. fünften Phase 11, 13, 15 gezeigt. Zur Optimierung der Montage dieser u-förmigen Phasen 11, 13, 15 sind zum einen Öffnungen 102 vorgesehen, die vorzugsweise oval ausgebildet sind. Auf der Seite der u-förmigen Verbindung sind vorzugsweise gerade Anschlagsflächen 100 ausgebildet, die mit Fixierungen 90 eines Isolierkörpers 72 zusammenwirken können und die seitlich etwas überstehen. Senkrecht zu der Hauptebene der u-förmigen Phase 11, 13, 15 ist wiederum der Anschluss 96 zur Bestromung orientiert. Auf der anderen Seite ist eine Anschlussfläche 97 vorgesehen, die in der Hauptebene flächig verläuft zur Kontaktierung mit der Sammelschiene 94.

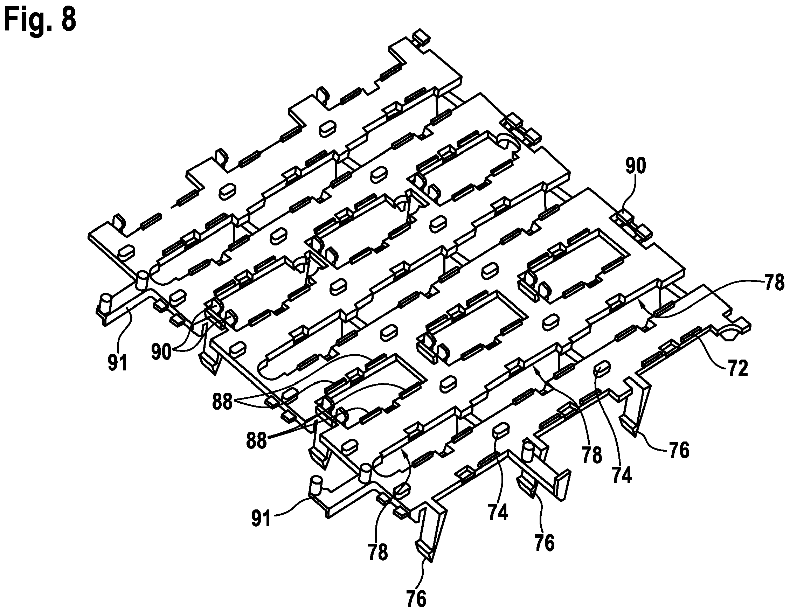

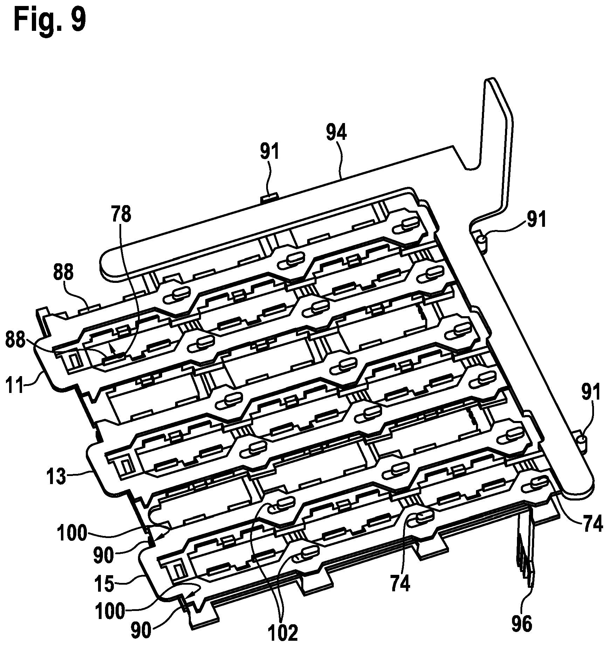

Die in den Figuren 6 und 7 gezeigten Phasen 11 bis 16 werden nun auf einem Isolierkörper 72 - wie in Verbindung mit Figur 8 nachfolgend beschrieben - montiert. Der Isolierkörper72 ist vorzugsweise gitterförmig aufgebaut und weist entsprechende Ausnehmungen 78 auf. Die Ausnehmungen 78 dienen dazu, die Schenkel der Kopplungsmittel 31 bis 39 aufzunehmen. Die Kopplungsmittel 31 bis 39 bestehen wie bereits in Verbindung mit Figur 4 beschrieben jeweils aus dem E-förmigen ersten Teil 44 und dem I-förmigen zweiten Teil 43, die die entsprechenden Magnetkerne bilden. Außerdem weist der Isolierkörper72 seitliche Aufnahmen 91 für eine Sammelschiene 94 auf. Weiterhin sind erste Befestigungsmittel 74 vorgesehen, die gegenüber der Hauptebene des Isolierkörpers 72 nach oben überstehen. Diese ersten Befestigungsmittel 74 sind hakenförmig ausgebildet. Diese hakenförmigen ersten Befestigungsmittel 74 wirken mit den Öffnungen 102 der u-förmigen Phasen 11, 13, 15 zusammen. Da pro u-förmiger Phase 11, 13, 15 jeweils sechs Öffnungen 102 vorgesehen sind, befinden sich am Isolierkörper72 für die aufzunehmenden drei Phasen 11, 13, 15 somit 18 hakenförmige erste Befestigungsmittel 74. Diese sind alle so orientiert, dass eine Verschiebung der u-förmigen Phasen 11, 13, 15 entlang ihrer Längsache möglich ist, nachdem die Öffnungen 102 über die ersten Befestigungsmittel 74 gebracht wurden. Diese seitliche Verschiebung der u-förmigen Phasen 11, 13, 15 wird an den jeweiligen Stirnseiten durch entsprechende Fixierungen 90 begrenzt, die mit den Anschlagsflächen 100 der u-förmigen Phasen 11, 13, 15 zusammenwirken. In diesem Zustand überdecken auch die Haken der ersten Befestigungsmittel 74 die Stromschienen der Phasen 11, 13, 15, so dass diese nicht mehr nach oben entweichen können wie in Figur 9 gezeigt. An den Ausnehmungen 78 des Isolierkörpers 72 sind Stege 88 vorgesehen. Der Isolierkörper72 weist weiterhin zweite Befestigungsmittel 76 auf. Diese sind senkrecht zur Isolierkörperoberfläche in entgegen gesetzter Richtung zu den ersten Befestigungsmitteln 74 orientiert und als flexible Schnappverbindungen ausgebildet. Die nach außen überstehenden Anschlussflächen 97 der Phasen 11, 13, 15 sind nun von einer rechtwinklig ausgeführten Sammelschiene 94 überdeckt und elektrisch leitend kontaktiert. Die Sammelschiene 94 befindet sich in den Aufnahmen 91 des Isolierkörpers 72 und ist so gegen seitliche Verschiebungen gesichert.

In der Darstellung gemäß Figur 10 wird der Isolierkörper 72 mit der Unterseite nach oben gezeigt. Die mäanderförmigen Phasen 12, 16, 14 werden mit der Unterseite des Isolierkörpers 72 verbunden. Die Querbereiche der mäanderförmigen Stromschienen 12, 14, 16 kommen hierbei auf den Stegen des Isolierkörpers 72 zu liegen. Die Stege sind mit entsprechende Erhöhungen 95 gegen seitliches Verschieben gesichert. Zur Befestigung der mäanderförmigen Phasen 12, 14, 16 wirken nun die zweiten Befestigungsmittel 76 bzw. deren Schnapphaken mit den Oberkanten der Abklappungsbereiche 60 zusammen. Bei der Montage werden die Schnapphaken zur Seite gedrückt und rasten bei Aufliegen der mäanderförmigen Phasen 11, 14, 16 auf dem Isolierkörper72 in den Abklappungsbereich 60 ein. Die entsprechenden Anschlüsse 96 der Phasen 11 bis 16 ragen senkrecht aus der Unterseite des Isolierkörpers 72 heraus. Die Anschlussflächen 97 der mäanderförmigen Phasen 12, 14, 16 sind mit der Sammelschiene 94 elektrisch leitend verbunden. Dies erfolgt beispielsweise durch sogenanntes Durchsetzfügen. Zwischen den Abklappungsbereichen 60 zweier Phasen, in der Figur 10 exemplarisch die zweite und die sechste Phase 12, 16 gezeigt, befinden sich zweite Stege 89. Diese dienen der elektrischen Isolation zwischen den beiden Phasen 12, 16, so dass kein Kurzschluss entsteht. Die zweiten Stege 89 sind senkrecht zu den Erhöhungen 95 orientiert.

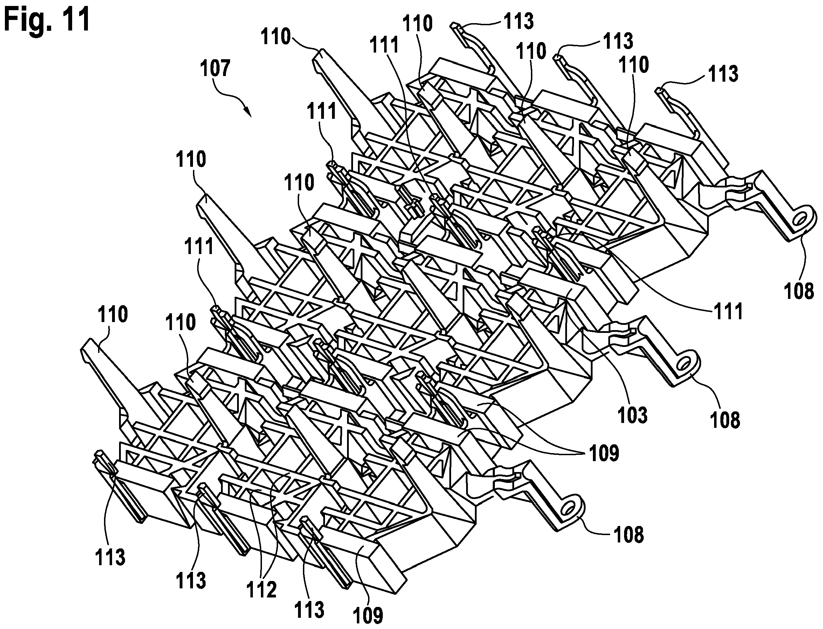

Gemäß dem Ausführungsbeispiel nach Figur 11 weist ein flächiger Träger 107 mehrere Befestigungsmittel 110 auf, die senkrecht zur Oberfläche des Trägers 107 nach oben überstehen. Diese Befestigungsmittel 110 sind als Schnappverbindungen bzw. Schnapphaken ausgebildet. Front- und stirnseitig wird der Träger 107 begrenzt durch ebenfalls senkrecht zur Oberfläche des Trägers 107 überstehende fingerförmige Seitenführungen 113. Diese Seitenführungen 113 fixieren die Kopplungsmittel 31 bis 39 seitlich. Zur weiteren Führung der Kopplungsmittel 31 bis 39 sind ebenfalls senkrecht zur Oberfläche des Trägers 107 überstehende fingerförmige Führungen 111 vorgesehen. Parallel zur Oberfläche des Trägers 107 orientierte rechteckförmige Auflageflächen sind gegenüber Rippen 112 leicht überstehend angeordnet und dienen als seitliche Auflage für die Kopplungsmittel 31 bis 39. Hierbei sind pro Kopplungsmittel 31 bis 39 zwei seitlich angeordnete Auflageflächen 109 vorgesehen, die jedoch die mittlere untere Seitenfläche des Kopplungsmittels 31 bis 39 nicht berühren, so dass in diesem Bereich eine Luftzirkulation und entsprechende Kühlung erreicht werden kann. Diese Luftzirkulation wird durch die tiefer liegende Rippenstruktur des Trägers 107 in diesem Bereich weiter unterstützt. Zwischen den vorzugsweise rechteckförmigen Rippen 112 bzw. Rippenstrukturen bilden sich Hohlräume, die jedoch an der Unterseite überwiegend geschlossen sind. An den seitlichen und mittleren Bereichen des Trägers 107 ragen von der Unterseite des Trägers im Wesentlichen senkrecht orientiert Haltemittel 108 nach unten und laufen in einer Öse aus, so dass der Träger 107 mittels einer Schraubverbindung beispielsweise mit einer Leiterplatte befestigt werden kann.

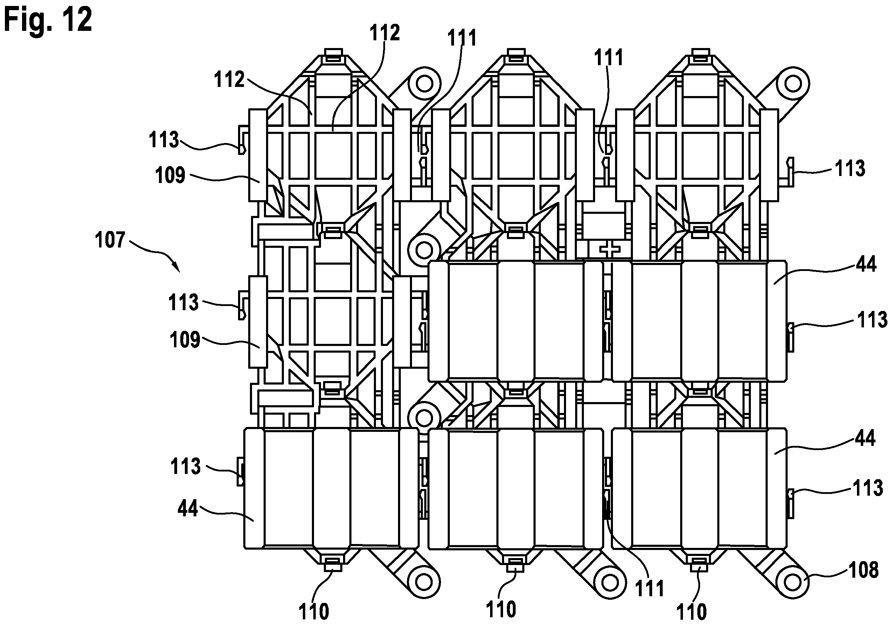

Bei der Draufsicht auf den Träger 107 gemäß Figur 12 sind bereits fünf Kopplungsmittel 31 bis 39 bzw. deren E-förmige (Unter)teile 44 montiert. Seitlich werden die ersten Teile 44 der Kopplungsmittel 31 bis 39 von Seitenführung 113 bzw. Führung 111 oder von zwei Führungen 111 seitlich fixiert, während eine Bewegung der ersten Teile 44 in Längsrichtung zur Feinpositionierung bzw. leichteren Gesamtmontage zugelassen wird.

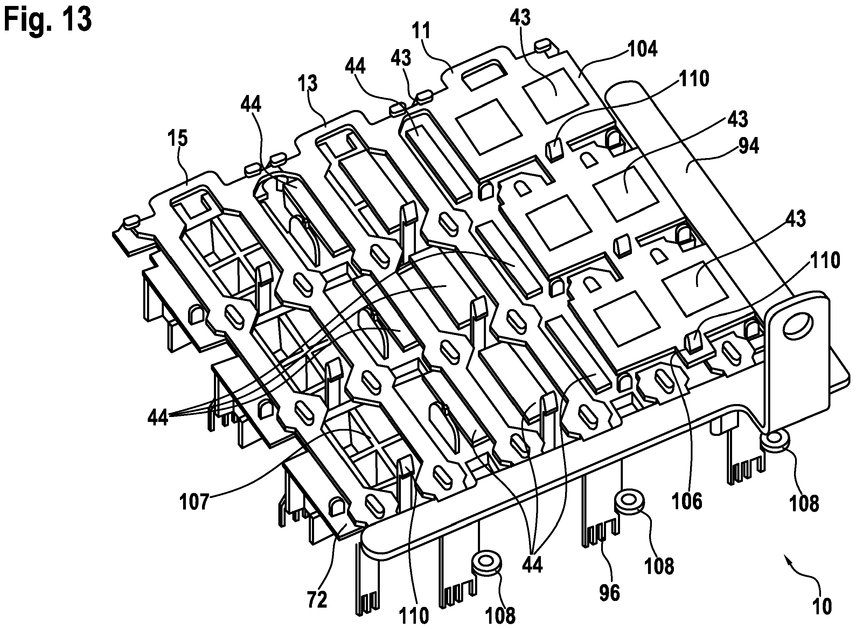

Wie in Figur 13 ersichtlich sind auf der Oberseite des Trägers 107 nun bereits bei den rechten beiden Reihen die ersten Teile 44 der Kopplungsmittel 31 bis 39 angeordnet. Sämtliche Phasen 11 bis 16 sind mit dem Isolierkörper 72 befestigt wie in Verbindung mit den Figuren 8 bis 10 beschrieben. Die Ausnehmungen 78 des Isolierkörpers 72 umgeben die nach oben ragenden Schenkel der ersten Teile 44 wie in der mittleren Reihe gezeigt. Auch die nach oben ragenden Befestigungsmittel 110 des Trägers 107 sind durch diese Ausnehmungen 78 hindurch geführt, so dass deren Schnapphaken noch über die Oberfläche der Schenkel der ersten Teile 44 überstehen. Dieser Zustand ist in der mittleren Reihe des Multiphasenwandlers 10 in Figur 13 gezeigt. In der letzten Reihe überdecken bereits die plattenförmigen zweiten Teile 43 die Schenkel der ersten Teile 44. Die zweiten Teile 43 werden durch ein Halteteil 104 in Richtung zu den ersten Teilen 44 gedrückt. Das Halteteil 104 besitzt entsprechende Öffnungen 106, in die jeweils die Schnapphaken der Befestigungsmittel 110 des Trägers 107 eingreifen. Das Halteteil 104 weist für die zu überdeckenden zweiten Teil 44 drei 8-förmige Konturen auf, die jeweils durch einen Steg miteinander verbunden sind.

### Beschreibung der Ausführungsbeispiele

Die beschriebenen Ausführungsbeispiele arbeiten wie nachfolgend näher erläutert. Multiphasenwandlern 10 bzw. DC/DC-Wandler mit hohen Leistungen ohne besondere Isolationsanforderungen können bevorzugt in mehrphasigen Anordnungen realisiert werden. Dadurch verteilt sich der hohe Eingangstrom I_{E} beispielsweise in Höhe von 300A auf die verschiedenen sechs Phasen 11 bis 16 in Höhe von jeweils 50A. Durch die anschließende Überlagerung der einzelnen Ströme zu einem Ausgangsstrom I_{A} kann ein geringerer Wechselstromanteil erzielt werden. Dann können die entsprechenden Eingangs- bzw. Ausgangsfilter gemäß Figur 1, beispielhaft als Kondensatoren eingezeichnet, entsprechend klein ausfallen. Die Ansteuerung der Phasen 11 bis 16 erfolgt sequentiell, das heißt nacheinander, so dass die Einschaltzeitpunkte jeweils 60 Grad (bzw. zeitlich um T/6) phasenverschoben sind (bei dem beschriebenen Sechs-PhasenSystem), wie dies in Figur 7 bereits näher gezeigt wurde. Abhängig von den gewünschten Spannungsverhältnissen werden die jeweiligen Phasen 11 bis 16 mit unterschiedlicher Dauer bestromt. Der entsprechende High-Side-Schalter des Schaltmittels 21 bis 26 wird hierzu geschlossen. Die Phase 11 bis 16 wird nicht bestromt, wenn der entsprechende Low-Side-Schalter des Schaltmittels 21 bis 26 geschlossen ist. Alternativ könnten auch solche Phasen 11 bis 16 als benachbart angesehen werden, deren Ausschaltzeitpunkte unmittelbar vorher oder nachher liegen. Dann würden die entsprechenden Einschaltpunkte variabel in Abhängigkeit vom gewünschten PWM-Signal gewählt werden.

Es wird nun jeweils eine Phase 11 mit zumindest drei weiteren Phasen 12, 14, 16 miteinander magnetisch gekoppelt, und zwar in der Weise, dass die Gleichanteile der einzelnen Phasen jeweils durch andere Phasen möglichst stark kompensiert werden. Dadurch reduziert sich das resultierende Magnetfeld, so dass die Auslegung der Kopplungsmittel 31 bis 39 bzw. des magnetischen Kreises nur noch im Wesentlichen auf das vom Wechselanteil erzeugte Magnetfeld erfolgen muss. Dadurch können die Kopplungsmittel 31 bis 39 wie beispielsweise Spulenkerne entsprechend klein dimensioniert werden, was zu erheblichen Ersparnissen an Kopplungsmaterial, Masse und Kosten führt. Insbesondere der Bauraum lässt sich dadurch stark reduzieren.

Neben den beiden mit Blick auf die Ansteuerung (Einschalt- bzw. Ausschaltzeitpunkte) benachbarten Phasen wird nun vorzugsweise die dritte zu verkoppelnde Phase derart ausgewählt, dass eine störende gegenseitige Beeinflussung der Phasen minimiert wird. Die Auswahl erfolgt so, dass eine optimale Kompensation des Gleichstromanteils erzielt wird. Hierbei hat sich ergeben, dass sich neben den benachbarten Phasen (+/- 60 Grad Phasenverschiebung der Einschaltzeitpunkte bei sechs Phasen, für die erste Phase 11 wären die benachbarten Phasen somit die zweite Phase 12 und die sechste Phase 16) auch die Phase mit einem Phasenversatz von 180 Grad (für die erste Phase 11 wäre dies die vierte Phase 14) besonders eignet, da sich dort eine sehr hohe Auslöschung des Gleichanteils ergibt. Die beiden Ströme durch die gekoppelten Phasen 11, 14 fließen entgegengesetzt im siebten Kopplungsmittel 37. Der resultierende Strom I res für die Magnetisierung des Kopplungsmittels 37 wird dabei nur durch die Differenz der Ströme I res ausgelöst. Die Gleichfelder heben sich größtenteils auf. Der reduzierte Gleichanteil macht sich positiv bemerkbar für die Geometrie des Kopplungsmittels 31 bis 39, welches nun mit einem geringeren Volumen auskommen kann. Bei sechs Phasen 11 bis 16 hat sich die in den Figuren 1 bis 3 gezeigte Kopplung als besonders geeignet herausgestellt.

### Magnetische Kopplung

Prinzipiell lassen sich zwei Phasen magnetisch koppeln, indem die beiden Phasen mit antiparalleler Stromführung durch ein rechteckförmiges oder ringförmiges Kopplungsmittel 31 bis 41 geführt werden. Wesentlich ist, dass das Kopplungsmittel 31 bis 41 in der Lage ist, einen magnetischen Kreis auszubilden. Dies ist bei einer im Wesentlichen geschlossenen Struktur möglich, die auch einen Luftspalt umfassen kann. Weiterhin besteht das Kopplungsmittel 31 bis 41 aus einem Magnetfeld leitenden Material mit geeigneter Permeabilität.

Das der Figur 3 zu Grunde liegende Kopplungskonzept lässt sich exemplarisch anhand der Figur 4 erläutern. Wesentlich ist, dass die zu verkoppelnden Phasen - gemäß Figur 4 sind es erste Phase 11 und zweite Phase 12 - mit gegenläufigem Stromfluss angesteuert werden. Die jeweils entsprechenden magnetischen Felder heben sich im Wesentlichen betreffend ihres Gleichanteils auf, so dass überwiegend nur noch der Wechselanteil zur Magnetfelderzeugung beiträgt. In der Folge können die entsprechenden Kopplungsmittel 31 bis 41 kleiner werden bzw. es kann auf einen Luftspalt verzichtet werden.

Ein mögliches Realisierungskonzept des Ausführungsbeispiels gemäß Figur 3 könnte aus einer Leiterplatte bestehen, in die die neun Kopplungsmittel 31 bis 39, hier vorzugsweise Planarkerne, eingebettet sind. Auf dieser Leiterplatte können alle Schaltmittel 21 bis 26, jeweils bestehend aus Highside- bzw. Lowside-MOSFETS als mögliche Ausführungsbeispiele integriert werden. Auch die Wicklungen für die erste, dritte und fünfte Phase 11, 13, 15 können in diese Leiterplatte integriert werden. Die anderen Wicklungen der zweiten, vierten und sechsten Phase 12, 14, 16 könnten über ein kostengünstigeres Kupferstanzgitter realisiert werden. Alternativ könnten auch die weiteren Wicklungen der zweiten, vierten und sechsten Phase 12, 14, 16 in der Leiterplatte integriert sein.

Realisierungen, bei denen alle Wicklungen in Form von Kupferschienen bzw. Leiterplatten ausgeführt sind, wären ebenfalls möglich. Ein weiterer Vorteil des Aufbaus gemäß Figur 3 besteht in den kurzen Wegen der Phasen 11 bis 16 durch alle Kopplungsmittel 31 bis 39 sowie der einfache Aufbau ohne Überkreuzungen.

### Aufbau Kopplungsmittel

Bei den Kopplungsmitteln 31 bis 41 handelt es sich um Mittel einer induktiven Kopplung wie beispielsweise ein Eisen- oder Ferritkern eines Transformators, auf dem die zu verkoppelnden Phasen 11 bis 16 ein Magnetfeld erzeugen. Das Kopplungsmittel 31 bis 42 schließt den magnetischen Kreis der zwei verkoppelten Phasen 11 bis 16.

Die Wahl des Materials des Kopplungsmittels 31 bis 38 und der Permeabilität spielt für die Kopplung keine so große Rolle. Wird kein Luftspalt verwendet, steigt die Permeabilität des magnetischen Kreises, wodurch die Induktivität der Spule größer wird. Dadurch wird der Stromanstieg flacher und die Stromformen nähern sich mehr dem idealen Gleichstrom an. Je näher die Kurvenformen einem Gleichstrom kommen, je geringer ist die resultierende Stromdifferenz zwischen den beiden Phasen, die (entgegengesetzt) durch einen Kern als Kopplungsmittel 31 bis 42 geführt werden. Der Aufwand für Filter wird dadurch reduziert. Auf der anderen Seite reagiert ein System ohne Luftspalt sehr sensibel auf die unterschiedlichen Ströme zwischen den Phasen 11 bis 16. Obwohl das System dazu neigt, bei geringeren Stromfehlern in Sättigung zu gehen, ist es durch die Mehrfachverkopplung aber immer noch recht stabil.

### Aufbau der Phasen

Fertigungstechnisch besonders vorteilhaft ist die Verwendung lediglich zweier geometrischer Formen der Phasen 11 bis 16 wie in Figur 5 in der Draufsicht dargestellt. Die eine Grundform weist hierbei einen U-förmigen Verlauf auf und liegen in derselben Ebene. Die zweite Grundform ist im Wesentlichen rechteck- bzw. mäanderförmig, ebenfalls in derselben Ebene liegend. Die gezeigten Abschnitte können als Bandleiter in Form von Stanzgittern oder in entsprechenden Leiterbahnen in einer Platine integriert sein. Wie in Verbindung mit den Figuren 3 und 6 beschrieben werden die U-förmigen Phasen 11, 13, 15 so zueinander angeordnet, dass sie auf einer ersten Ebene zu liegen kommen. Entsprechend werden auch die rechteck- bzw. mäanderförmigen Phasen 12, 14, 16 so angeordnet, dass sie auf einer zweiten Ebene zu liegen kommen. Diese beiden Ebenen werden parallel und beabstandet so zueinander angeordnet, dass die jeweils zu koppelnden Phasenabschnitte durch die Kopplungsmittel 31 bis 42 umgeben werden können.

Grundsätzlich wären jedoch auch alternative Ausgestaltungen der Phasenformen denkbar, ohne den Grundgedanken des vorzugsweise planaren Aufbaus zu verlassen.

Insbesondere sind gewisse Anpassungen denkbar, um den Platzbedarf der Gesamtanordnung weiter zu reduzieren. Durch eine entsprechende Ausgestaltung der Geometrie der Phasen 11 bis 16 soll erreicht werden, dass die Kopplungsmittel 31 bis 39 näher an den jeweils benachbarten Kopplungsmitteln 31 bis 39 angeordnet werden können. Dies lässt sich beispielsweise gemäß dem Ausführungsbeispiel nach Figur 6 dadurch erreichen, dass die Enden der Stromschienen der Phasen 12, 14, 16 abgeklappt sind in Abklappungsbereichen 60. Sobald die gekoppelten Phasenbereiche (solche Bereiche, die von den Kopplungsmitteln 31 bis 39 umgeben werden) die Kopplungsmittel 31 bis 39 verlassen, ändert sich die Richtung gegenüber derjenigen innerhalb des Kopplungsmittels 31 bis 42. Dadurch können die Kopplungsmittel 39, 35; 35, 34; 32, 38; 38, 33 näher zusammen rücken. Hierbei können die mäanderförmigen Stromschienen der jeweiligen Phasen 12, 14, 16 auch an den Seiten hochgebogen werden.

### Aufbau- und Verbindungstechnik

Bei dem Ausführungsbeispiel gemäß den Figuren 8 bis 13 übernimmt der Isolierkörper 72 mehrere Funktionen. Zum einen dient er der elektrischen Isolierung der einzelnen Phasen 11 bis 16 voneinander. Hierzu werden die mäanderförmigen Phasen 12, 14, 16 auf der einen Seite des Isolierkörpers 72 und die u-förmigen Phasen 11, 13, 15 auf der gegenüberliegenden Seite des Isolierkörpers 72 montiert. Außerdem dienen die zweiten Stege 89 dazu, die benachbarten Abklappungsbereiche 60 unterschiedlicher mäanderförmiger Phasen 12, 16 nicht in elektrischen Kontakt zueinander zu bringen wie exemplarisch in Figur 10 für die Phasen 12 und 16 gezeigt. Außerdem übernimmt der Isolierkörper 72 die Befestigungsfunktion für die Stromschienen der Phasen 11 bis 19. Wie bereits beschrieben wirken die ersten Befestigungsmittel 74, die als Haken ausgebildet sind, mit den Öffnungen 102 der u-förmigen Phasen 11, 13, 15 zusammen. Die zweiten Befestigungsmittel 76, welche als Schnapphaken ausgebildet sind, wirken mit den senkrecht gegenüber der Hauptebene orientierten Kanten der Abklappungsbereiche 60 der mäanderförmigen Phasen 12, 14, 16 zusammen. Hierdurch werden diese mit dem Isolierkörper 72 verbunden. Außerdem sind seitlich Fixierungen 90 bzw. Befestigungsmittel vorgesehen, die mit den Anschlagsflächen 100 der u-förmigen Phasen 11, 13, 15 zusammenwirken und ein weiteres seitliches Verschieben der Phasen 11, 13, 15 verhindern. Außerdem dienen die ersten Stege 88 dazu, sicher einen elektrischen Kontakt zwischen den u-förmigen Phasen 11, 13, 15 mit dem ersten und/oder zweiten Teil 43, 44 der Kopplungsmittel 31 bis 39 zu unterbinden.

Der Träger 107 dient der Aufnahme der ersten Teile 44 der Kopplungsmittel 31 bis 39. Hierzu sind entsprechende Auflageflächen 109 sowie Führungen 111 bzw. Seitenführungen 113 vorgesehen. Die Führungen 111, 113 lassen noch eine Verschiebung der ersten Teile 44 in Längsrichtung zu, was jedoch beschränkt wird durch die an den Stirnseiten angeordnete Befestigungsmittel 110. Durch die Verschiebbarkeit der ersten Teile 44 in Längsrichtung kann eine einfache Überdeckung der nach oben ragenden Schenkel der ersten Teile 44 mit den Ausnehmungen des Isolierkörpers 72 vorgenommen werden. Die Befestigungsmittel 110 des Trägers 107 sind ebenfalls als Schnapphaken ausgeführt. Sie dienen der Fixierung von Isolierkörper 72 und erste Teile 43 mit dem Träger 107. Dies erfolgt mittels der weiteren Halteteile 104, in deren Öffnungen 106 die Schnapphaken eingreifen. Dieses Halteteil 104 drückt dann gegen das zweite Teil 43 des jeweiligen Kopplungsmittels 31 bis 39. Durch die gegenüber der Auflagefläche 109 tiefer liegende Rippenstruktur des Trägers 107 kann ein Luftstrom die Oberfläche der Kopplungsmittel 31 bis 39 zur Kühlung erreichen. Dadurch, dass die Auflageflächen 109 die mittlere untere Seitenfläche des Kopplungsmittels 31 bis 39 nicht berühren, kann in diesem Bereich eine Luftzirkulation und entsprechende Kühlung erreicht werden. Diese Luftzirkulation wird durch die tiefer liegende Rippenstruktur des Trägers 107 in diesem Bereich weiter unterstützt.

Zur Montage des Multiphasenwandlers wird wie folgt vorgegangen: Zuerst wird der Isolierkörper 72 bereitgestellt. Anschließend werden die u-förmigen Phasen 11, 13, 15 dem Isolierkörper72 so zugeführt, dass die Öffnungen 102 die ersten Befestigungsmittel 74, nämlich die Haken, überdecken. Dann werden die u-förmigen Phasen 11, 13, 15 seitlich so verschoben, bis die Anschlagflächen 100 der u-förmigen Phasen 11, 13, 15 auf die Fixierungen 90 bzw. Befestigungsmittel treffen und so ein weiteres Verschieben verhindert wird. Die Fixierungen 90 bzw. Befestigungsmittel sind vorzugsweise ebenfalls hakenförmig ausgebildet und überdecken die Anschlagsflächen 100 auch von oben. In diesem Zustand überdecken auch die ersten Befestigungsmittel 74 die Stromschienen der u-förmigen Phasen 11, 13, 15, so dass sie nicht mehr nach oben entweichen können. Die Anschlussflächen 97 der u-förmigen Phasen 11, 13, 15 werden entweder jetzt oder bereits im Vorfeld mit der Sammelschiene 94 elektrisch leitend kontaktiert. Diese elektrisch leitende Kontaktierung könnte beispielsweise mittels Durchsetzfügen erfolgen. Der Unterseite des Isolierkörpers 72 werden die mäanderförmigen Phasen 12, 14, 16 zugeführt wie in Verbindung mit Figur 10 näher erläutert. Bei der Montage schieben die Abklappungsbereiche 60 die zweiten Befestigungsmittel 76 bzw. deren Schnapphaken zur Seite, welche dann in der gewünschten Endposition der mäanderförmigen Phasen 12, 14, 16 mit der Seitenkante der Abklappungsbereiche 60 im Sinne einer festen Verbindung zusammenwirken. Nachfolgend werden die Anschlussflächen 97 der mäanderförmigen Phasen 12, 14, 16 mit der Sammelschiene 94 elektrisch leitend verbunden. Auch dies könnte beispielsweise mittels Durchsetzfügen erfolgen.

Anhand Figur 13 sind nun die weiteren Montageschritte ersichtlich. Auf der Oberseite des Trägers 107 sind nun bereits alle neun ersten Teile 44 der Kopplungsmittel 31 bis 39 angeordnet. Mittlerweile sind auch sämtliche Phasen 11 bis 16 mit dem Isolierkörper 72 befestigt wie in Verbindung mit den Figuren 8 bis 10 beschrieben. Nun wird der montierte Isolierkörper 72 so über dem Träger 72 angeordnet, dass die Ausnehmungen 78 über die nach oben ragenden Schenkel der ersten Teile 44 geschoben werden können. Auch die nach oben ragenden Befestigungsmittel 110 werden durch diese Ausnehmungen 78 hindurch geführt, so dass deren Schnapphaken noch über die Oberfläche der Schenkel der ersten Teile 44 überstehen. Dieser Zustand ist in der mittleren Reihe des Multiphasenwandlers 10 in Figur 13 gezeigt.

In einem nächsten Schritt werden jeweils die drei nach oben ragenden Schenkel des ersten Teils 44 durch das plattenförmige zweite Teil 43 geschlossen. Dies ist in der rechten Reihe der Figur 13 angedeutet. Zur Fixierung der zweiten Teile 42 werden in einem letzten Schritt entsprechende Halteteile 104 montiert. Diese sind beispielsweise gitterförmig ausgebildet jeweils in Form einer Acht für jedes der drei zweiten Teile 43 der rechten Reihe. Diese Halteteile 104 sind miteinander über Stege verbunden, welche Öffnungen 106 aufweisen. Diese Öffnungen 106 dienen zur Aufnahme der Befestigungsmittel 110 des Trägers 107, an deren Ende jeweils Schnapphaken vorgesehen sind. Auf diese Art und Weise werden die zweiten Teile 43 sowie der mit den Phasen 11 bis 16 versehene Isolierkörper 72 fest mit dem Träger 107 verbunden, indem die Halteteile 104 über die Schnapphaken der Befestigungsmittel 110 gegen die zweiten Teile 43 der Kopplungsmittel 31 bis 39 drücken. Als Halteteile 104 sind vorzugsweise Federmittel aus Blech vorgesehen, um so eine gewisse Vorspannung zu erreichen.

Anschließend werden Isolierkörper 72 und Träger 107 mit einer Leiterplatte verbunden. Hierzu dienen die Haltemittel 108. Außerdem werden die entsprechenden Anschlüsse 96 durch Öffnungen der Leiterplatte geführt und entsprechend weiter kontaktiert.

Der beschriebene Multiphasenwandler 10 eignet sich insbesondere für den Einsatz in einem Kraftfahrzeugbordnetz, bei dem insbesondere dynamische Lastanforderungen von untergeordneter Bedeutung sind. Insbesondere für solche vergleichsweise trägen Systeme eignet sich der beschriebene Aufbau.

## Patentansprüche

1. Multiphasenwandler, umfassend mehrere elektrische Phasen (11 bis 16), die jeweils durch Schaltmittel (21 bis 26) ansteuerbar sind, wobei zumindest ein Kopplungsmittel (31 bis 39) vorgesehen ist, das zumindest eine erste Phase (11) mit zumindest einer weiteren Phase (12, 14, 16) magnetisch koppelt, wobei zumindest zwei zu koppelnde Phasen (11, 12) zumindest teilweise von dem Kopplungsmittel (31) umschlossen sind, **dadurch gekennzeichnet, dass** zumindest ein Isolierkörper (72) vorgesehen ist, der die zu koppelnden Phasen (11 bis 16) an seiner Oberseite bzw. Unterseite aufnimmt und an dem zumindest ein Befestigungsmittel (74, 76, 90) vorgesehen ist, das zur Befestigung mit zumindest einer der Phasen (11 bis 16) zusammenwirkt, wobei der Isolierkörper (72) zumindest eine Ausnehmung (78) aufweist zur Durchführung zumindest eines Kopplungsmittels (31 bis 39).

2. Multiphasenwandler nach Anspruch 1, **dadurch gekennzeichnet, dass** ein Träger (107) vorgesehen ist, der zumindest eine Auflagefläche (109) aufweist zur Aufnahme des Kopplungsmittels (31 bis 39).

3. Multiphasenwandler nach Anspruch 2, **dadurch gekennzeichnet, dass** die Auflagefläche (109) so ausgebildet ist, dass das Kopplungsmittel (31 bis 39) nur teilweise auf dem Träger (107) aufliegt.

4. Multiphasenwandler nach einem der vorhergehenden Ansprüche, **dadurch gekennzeichnet, dass** der Träger (107) zumindest ein Befestigungsmittel (108, 110) aufweist zur Befestigung des Trägers (107) mit dem Kopplungsmittel (31 bis 39), dem Isolierkörper (72) oder einer Leiterplatte.

5. Multiphasenwandler nach einem der vorhergehenden Ansprüche, **dadurch gekennzeichnet, dass** der Träger (107) zumindest ein Führungsmittel (111, 113) aufweist, das zur Führung mit dem Kopplungsmittel (31 bis 39) zusammenwirkt.

6. Multiphasenwandler nach einem der vorhergehenden Ansprüche, **dadurch gekennzeichnet, dass** das Befestigungsmittel (108, 110) des Trägers (107) mit einem Halteteil (104) zusammenwirkt zur Fixierung des Kopplungsmittels mit dem Träger (107).

7. Multiphasenwandler nach einem der vorhergehenden Ansprüche, **dadurch gekennzeichnet, dass** zumindest zwei Phasen (11, 13, 15), vorzugsweise drei Phasen, räumlich in einer ersten Ebene an der Oberseite des Trägers (72) angeordnet sind und dass zumindest zwei weitere Phasen (12, 14, 16), vorzugsweise drei weitere Phasen, räumlich in einer zweiten Ebene an der Unterseite des Trägers (107) verlaufen.

8. Multiphasenwandler nach einem der vorhergehenden Ansprüche, **dadurch gekennzeichnet, dass** zumindest eine Phase (11 bis 16) U-förmig, rechteckförmig und/oder mäanderförmig ausgebildet ist.

9. Multiphasenwandler nach einem der vorhergehenden Ansprüche, **dadurch gekennzeichnet, dass** die an der einen Seite des Trägers (107) angeordnete Phase (11, 13, 15) U-förmig und die an der gegenüberliegenden Seite des Trägers (107) angeordnete Phase (12, 14, 16) mäanderförmig ausgebildet ist.

10. Multiphasenwandler nach einem der vorhergehenden Ansprüche, **dadurch gekennzeichnet, dass** das Befestigungsmittel (74, 76, 90) zumindest einen Haken umfasst, der mit zumindest einer Öffnung (102) oder einer Seitenkante (60, 100) der Phase (11 bis 16) zusammenwirkt.

11. Multiphasenwandler nach einem der vorhergehenden Ansprüche 4 bis 10, **dadurch gekennzeichnet, dass** das Befestigungsmittel (76) mit einer Seitenkante an einem Abklappungsbereich (60) der Phase (12, 14, 16) zusammenwirkt.

12. Multiphasenwandler nach einem der vorhergehenden Ansprüche, **dadurch gekennzeichnet, dass** der Isolierkörper (72) Stege (88, 89) aufweist zur elektrischen Isolation der Phasen (11 bis 16) voneinander bzw. gegenüber dem Kopplungsmittel (31 bis 39).

13. Multiphasenwandler nach Anspruch 12, **dadurch gekennzeichnet, dass** der Steg (89) zwischen zwei Abklappungsbereichen (60) zwei benachbarter Phasen (12, 16) angeordnet ist.

14. Multiphasenwandler nach einem der vorhergehenden Ansprüche 4 bis 13, **dadurch gekennzeichnet, dass** das Befestigungsmittel (90) des Isolierkörpers (72) mit zumindest einer Anschlagfläche (100) der Phase (11, 13, 15) zusammenwirkt.

## Claims

1. Polyphase converter comprising a plurality of electrical phases (11 to 16) which can each be driven by switching means (21 to 26), wherein at least one coupling means (31 to 39) which magnetically couples at least one first phase (11) to at least one further phase (12, 14, 16) is provided, wherein at least two phases (11, 12) to be coupled are enclosed at least partially by the coupling means (31), **characterized in that** at least one insulating body (72), which accommodates the phases (11 to 16) to be coupled on the upper side and underside thereof and on which is provided at least one fixing means (74, 76, 90) which interacts with at least one of the phases (11 to 16) for fixing purposes, is provided, wherein the insulating body (72) has at least one cutout (78) for feeding through at least one coupling means (31 to 39).

2. Polyphase converter according to Claim 1, **characterized in that** a carrier (107), which has at least one mounting surface (109) for accommodating the coupling means (31 to 39), is provided.

3. Polyphase converter according to Claim 2, **characterized in that** the mounting surface (109) is designed so that the coupling means (31 to 39) only partially rests on the carrier (107).

4. Polyphase converter according to one of the preceding claims, **characterized in that** the carrier (107) has at least one fixing means (108, 110) for fixing the carrier (107) to the coupling means (31 to 39), to the insulating body (72) or to a printed circuit board.

5. Polyphase converter according to one of the preceding claims, **characterized in that** the carrier (107) has at least one guide means (111, 113) which interacts with the coupling means (31 to 39) for guidance purposes.

6. Polyphase converter according to one of the preceding claims, **characterized in that** the fixing means (108, 110) of the carrier (107) interacts with a retaining part (104) for fixing the coupling means to the carrier (107).

7. Polyphase converter according to one of the preceding claims, **characterized in that** at least two phases (11, 13, 15), preferably three phases, are arranged spatially in a first plane on the upper side of the carrier (72) and **in that** at least two further phases (12, 14, 16), preferably three further phases, run spatially in a second plane on the underside of the carrier (107).

8. Polyphase converter according to one of the preceding claims, **characterized in that** at least one phase (11 to 16) is designed in a U-shape, as a rectangle and/or in a meandering fashion.

9. Polyphase converter according to one of the preceding claims, **characterized in that** the phase (11, 13, 15) arranged on the one side of the carrier (107) is designed in a U-shape and the phase (12, 14, 16) arranged on the opposite side of the carrier (107) is designed in a meandering fashion.

10. Polyphase converter according to one of the preceding claims, **characterized in that** the fixing means (74, 76, 90) has at least one hook which interacts with at least one opening (102) or one side edge (60, 100) of the phase (11 to 16).

11. Polyphase converter according to one of the preceding Claims 4 to 10, **characterized in that** the fixing means (76) interacts with a side edge on a fold-down region (60) of the phase (12, 14, 16).

12. Polyphase converter according to one of the preceding claims, **characterized in that** the insulating body (72) has webs (88, 89) for electrically insulating the phases (11 to 16) from one another and with respect to the coupling means (31 to 39).

13. Polyphase converter according to Claim 12, **characterized in that** the web (89) is arranged between two fold-down regions (60) of two adjacent phases (12, 16).

14. Polyphase converter according to one of the preceding Claims 4 to 13, **characterized in that** the fixing means (90) of the insulating body (72) interacts with at least one stop surface (100) of the phase (11, 13, 15).

## Revendications

1. Transducteur multiphasé, comprenant plusieurs phases électriques (11 à 16), qui peuvent être commandées respectivement par des moyens de commutation (21 à 26), dans lequel il est prévu au moins un moyen de couplage (31 à 39) qui opère le couplage magnétique d'au moins une première phase (11) avec au moins une autre phase (12, 14, 16), dans lequel au moins deux phases à coupler (11, 12) sont entourées au moins en partie par le moyen de couplage (31), **caractérisé en ce qu'**il est prévu au moins un corps isolant (72), qui porte les phases à coupler (11 à 16) sur son côté supérieur ou son côté inférieur et sur lequel il est prévu au moins un moyen de fixation (74, 76, 90), qui coopère pour la fixation avec au moins une des phases (11 à 16), dans lequel le corps isolant (72) présente au moins un évidement (78) destiné au passage d'au moins un moyen de couplage (31 à 39).

2. Transducteur multiphasé selon la revendication 1, **caractérisé en ce qu'**il est prévu un support (107), qui présente au moins une face d'appui (109) destinée à recevoir le moyen de couplage (31 à 39).

3. Transducteur multiphasé selon la revendication 2, **caractérisé en ce que** la face d'appui (109) est configurée de telle manière que le moyen de couplage (31 à 39) ne repose que partiellement sur le support (107).

4. Transducteur multiphasé selon l'une quelconque des revendications précédentes, **caractérisé en ce que** le support (107) présente au moins un moyen de fixation (108, 110) pour la fixation du support (107) au moyen de couplage (31 à 39), au corps isolant (72) ou à une plaquette de circuits imprimés.

5. Transducteur multiphasé selon l'une quelconque des revendications précédentes, **caractérisé en ce que** le support (107) présente au moins un moyen de guidage (111, 113), qui coopère pour le guidage avec le moyen de couplage (31 à 39).

6. Transducteur multiphasé selon l'une quelconque des revendications précédentes, **caractérisé en ce que** le moyen de fixation (108, 110) du support (107) coopère avec une partie de maintien (104) pour la fixation du moyen de couplage au support (107).

7. Transducteur multiphasé selon l'une quelconque des revendications précédentes, **caractérisé en ce qu'**au moins deux phases (11, 13, 15), de préférence trois phases, sont disposées spatialement dans un premier plan sur le côté supérieur du support (72) et **en ce qu'**au moins deux autres phases (12, 14, 16), de préférence trois autres phases, s'étendent spatialement dans un second plan sur le côté inférieur du support (107).

8. Transducteur multiphasé selon l'une quelconque des revendications précédentes, **caractérisé en ce qu'**au moins une phase (11 à 16) est réalisée en forme de U, en forme de rectangle et/ou en forme de méandres.

9. Transducteur multiphasé selon l'une quelconque des revendications précédentes, **caractérisé en ce que** la phase (11, 13, 15) disposée sur le premier côté du support (107) est réalisée en forme de U et la phase (12, 14, 16) disposée sur le côté opposé du support (107) est réalisée en forme de méandres.

10. Transducteur multiphasé selon l'une quelconque des revendications précédentes, **caractérisé en ce que** le moyen de fixation (74, 76, 90) comprend au moins un crochet, qui coopère avec au moins une ouverture (102) ou un bord latéral (60, 100) de la phase (11 à 16).

11. Transducteur multiphasé selon l'une quelconque des revendications précédentes, **caractérisé en ce que** le moyen de fixation (76) coopère avec un bord latéral sur une région de rabattement (60) de la phase (12, 14, 16).

12. Transducteur multiphasé selon l'une quelconque des revendications précédentes, **caractérisé en ce que** le corps isolant (72) présente des nervures (88, 89) pour l'isolation électrique des phases (11 à 16) l'une de l'autre ou par rapport au moyen de couplage (31 à 39).

13. Transducteur multiphasé selon la revendication 12, **caractérisé en ce que** la nervure (89) est disposée entre deux régions de rabattement (60) de deux phases voisines (12, 16).

14. Transducteur multiphasé selon l'une quelconque des revendications précédentes 4 à 13, **caractérisé en ce que** le moyen de fixation (90) du corps isolant (72) coopère avec au moins une face de butée (100) de la phase (11, 13, 15).
